# EUROPÄISCHE PATENTSCHRIFT

(11) **EP 0 992 332 B1**
(45) Veröffentlichungstag und Bekanntmachung des Hinweises auf die Patenterteilung: **05.06.2002**
(21) Anmeldenummer: 99117084.6
(22) Anmeldetag: 31.08.1999
(51) Int. Cl.: B29C 45/27, B29C 45/28

(54) **Heisskanalverschluss**
Hot channel closure
Fermeture des canaux chauds

(30) Priorität: 10.09.1998 DE 29816253 U
(43) Veröffentlichungstag der Anmeldung: 12.04.2000
(73) Patentinhaber: Günther Heisskanaltechnik GmbH, 35066 Frankenberg/Eder (DE)
(72) Erfinder: Günther, Herbert, 35108 Allendorf/Eder (DE)
(74) Vertreter: Olbricht, Karl Heinrich, Dipl.-Phys.

(56) Entgegenhaltungen:
- EP-A- 0 226 798
- EP-A- 0 845 345

## Beschreibung

Die vorliegende Erfindung betrifft eine Anordnung zum Verschließen von Kanalabschnitten in einem Heißkanalverteiler nach dem Oberbegriff von Anspruch 1.

Bei Vorrichtungen für das Heißkanal-Spritzgießen ist es bekannt, im Eckbereich eines Verteiler-Kanals zylindrische Stopfen einzusetzen, welche die Enden des Kanals abschließen und/oder im Winkel abbiegende Kanalabschnitte als Umlenkstück druckdicht verbinden. Beispielsweise setzt man gemäß EP 0 226 798 A1 Stopfen koaxial an die Enden eines Hauptkanals, um jeweils ein Umlenkstück mit einem Konusloch anzuschließen. Dieses geht im Stopfen mit einer abgewinkelten Bohrung weiter, die zu einer Austrittsöffnung des Verteilers führt. An der Bohrungs-Gehrung ist eine Engstelle gebildet, die prinzipiell einen Strömungswiderstand darstellt; wenn dort plastifiziertes Material haftenbleibt, ist die Reinigung erschwert oder unmöglich, so daß der Stopfen insgesamt ersetzt werden muß. Dessen Fixierung im Verteiler erfolgt durch Einlöten, weshalb die Kanäle einer mechanischen Reinigung nicht ohne weiteres zugänglich sind.

Eine vergleichbare Anordnung geht aus DE 32 11 342 A1 hervor. Danach ist in aufgeweitete Mündungen eines Verteiler-Querkanals jeweils ein Konus eingesetzt, der durch einen einseitig abgeschrägten, mittels einer Durchgangsschraube im Verteiler befestigten Riegel druckdicht verschließbar ist. Hierbei sind tote Ecken unvermeidlich, in denen sich (Rest-)Material ansammeln kann, was eventuell den Betrieb stört bzw. die Produktqualität beeinträchtigt und jedenfalls die Reinigung behindert.

Demgegenüber verbesserte Anordnungen wurden in EP 0 523 549 A2, EP 0 630 733 B1 und EP 0 845 345 A1 vorgeschlagen, nämlich mit Stahlkonus-Einsätzen, die Umlenk-Bohrungen aufweisen und am Verteiler entweder durch Pilzkopf-Schrauben niedergehalten oder durch Justierschrauben eingepreßt oder von Schraubbolzen mit Innenkonus übergriffen werden. Obgleich derartige Verbindungen auch bei hohem Spritzdruck funktionstüchtig sind, ist doch der Herstellungs-Aufwand verhältnismäßig hoch und der paßgenaue Konus-Einbau nicht immer einfach. In der Fertigung ist es schwierig oder sogar unmöglich, die Lage-Deckungsgleichheit zwischen der Bohrung im Konus und der Bohrung im Verteiler herzustellen. Hinzu kommt, daß die Position der Konusbohrung in der Verteilerbohrung von der Anpreßkraft abhängt. Der Zusammenhang ist um so problematischer, je schlanker der Konus ist. Tote Ecken und Strömungsschatten, in denen sich Material absetzen kann, sind unvermeidbar.

Es ist ein wichtiges Ziel der Erfindung, hier Abhilfe zu schaffen und eine neuartige Anordnung zu entwickeln, welche die genannten und weitere Nachteile des Standes der Technik vermeidet bzw. mit einfachen Mitteln überwindet. Sie soll den hohen Anforderungen von schnellem Spritzgieß-Betrieb genügen und einen raschen Farbwechsel erlauben. Ferner bezweckt die Erfindung eine solche Ausgestaltung der Verbindungs-Anordnung, daß die Herstellung von balancierten Verteilern erleichtert wird. Die benutzten Mittel sollen sowohl kostengünstig herstellbar als auch bequem montierbar und demontierbar sein.

Hauptmerkmale der Erfindung sind im kennzeichnenden Teil von Anspruch 1 angegeben. Ausgestaltungen sind Gegenstand der Ansprüche 2 bis 18.

Bei einer Anordnung zum Verschließen von Kanalabschnitten in einem Heißkanalverteiler, der wenigstens einen mit plastifizierter Masse beschickbaren Kanal aufweist, welcher durch lösbar am Verteiler befestigte Stopfen druckdicht verschließbar ist, sieht die Erfindung gemäß Anspruch 1 vor, daß der Stopfen am Verteiler in spitzem Winkel zu der Achse des Kanals befestigbar ist und eine Stirnfläche hat, die druckdicht auf eine ihr gegenüberliegende geschlossene Ringfläche preßbar ist, welche eine Öffnung des Kanals umschließt oder begrenzt. Man erzielt so eine auch bei sehr hohen Drücken, z.B. im Bereich oberhalb 2 kbar, voll wirksame Abdichtung, ohne - wie bisher - tote Ecken in Kauf nehmen zu müssen. Die Stopfen bilden lösbare Verschlüsse, die eine mechanische Reinigung erlauben. Sie lassen sich dank ihrer Schräglage rasch montieren und auch entnehmen, so daß die für einen Masse- bzw. Farbwechsel notwendigen Arbeiten in außerordentlich kurzer Zeit ausgeführt werden können.

Eine vorteilhafte Weiterbildung besteht laut Anspruch 2 darin, daß die Stirnfläche des Stopfens an einem entlang seiner Achse geführten Druckstück als geschlossener Abdichtrand ausgebildet ist, durch den die konturgenaue Abdichtung an der Ringfläche bewirkt wird. Ungenauigkeiten oder Versetzungen von Ring- und Stirnfläche werden dadurch von vornherein vermieden. Die Betätigung des Druckstücks kann besonders einfach erfolgen, wenn der Stopfen im Einklang mit Anspruch 3 einen Schraubkörper aufweist, an oder in dessen Kopf ein Werkzeug ansetzbar ist.

In der Ausbildung gemäß Anspruch 4 ist der Stopfen zweiteilig, indem einem Schraubkopf ein separates Druckstück vorgeordnet ist Letzteres wird laut Anspruch 5 in einer Schrägbohrung, die an dem abzudichtenden Kanalbereich im Verteiler mündet, exakt geführt Geringe Winkelabweichungen oder auch ein kleiner Mittenversatz des getrennten Schraubkörpers können die Abdichtung durch satte Anlage der Stirnfläche des Stopfens an der Ringfläche nicht beeinträchtigen. Die Schrägbohrung wird zweckmäßig als Stufenbohrung ausgeführt, wobei an einen äußeren Abschnitt von etwas größerem Durchmesser ein Gewindeabschnitt zur Aufnahme des Schraubkörpers anschließt und innen ein zylindrischer, noch schmälerer Abschnitt folgt, in dem das Stopfen-Druckstück mit enger Passung sitzt.

Nach Anspruch 6 kann die Stopfen-Stirnfläche zumindest teilweise plan sein, namentlich am Abdichtrand, so daß unmittelbar dichter Formschluß zu der Ringfläche sichergestellt ist. Femer sieht Anspruch 7 vor, daß die Stopfen-Stirnfläche eine Wölbung aufweist, also insbesondere innerhalb des Abdichtrandes teilweise aus der Dichtungsebene heraustritt. Laut Anspruch 8 hat die Wölbung die Gestalt einer Kugelkalotte, deren maximale Radialausdehnung - bezogen auf die Stopfenachse - durch den Mindestradius des Abdichtrandes begrenzt ist

Gemäß Anspruch 9 verläuft die Wölbung in der Stirnfläche konkav; sie bildet mithin eine Ausnehmung, durch die auf sehr einfache Weise eine passende Gestalt-Ergänzung an einem Eck oder Knie eines Kanalabschnitts erzielbar ist, ohne daß eine Verdrehsicherung des Stopfens bzw. des Druckstücks erforderlich wäre. Insbesondere läßt sich auf diese Art ein kontinuierlicher Übergang zu einem Abzweig herstellen, so daß ein gleichmäßiger oder stetig fortgesetzter Querschnitt gebildet wird; daran schließt z.B. eine zugeordnete Düse mit gleicher lichter Kanalweite an.

Andere Vorteile bietet die Gestaltung nach Anspruch 10 mit einer konvexen, insbesondere leicht balligen Wölbung an der Stimfläche und/oder an der dem Schraubkopf zugewandten Oberseite des Druckstücks. Auch bei einer Winkelabweichung zur Stopfenachse werden dadurch an der Ringfläche zusätzlich zum zentrischen Druck Radialkraft-Komponenten nach außen wirksam, was die Abdichtung weiter verbessern kann.

Gemäß Anspruch 11 hat das Druckstück ein insbesondere zentrisch angeordnetes Gewindeloch, in das -nach Entfernen des Schraubkörpers- eine Ziehschraube eingreifen kann, um das Druckstück z.B. zu Reinigungszwecken bequem aus der Schrägbohrung im Verteiler herauszuholen.

Vorteilhaft ist es, wenn im Einklang mit Anspruch 12 die Ringfläche an einem Eck oder Knie angeordnet ist, mit dem der Kanal in einen Abzweig oder eine Austrittsöffnung des Verteilers übergeht, insbesondere zur Einspeisung von Spritzmasse in eine am Verteiler angebrachte Düse. Die Ringfläche ist laut Anspruch 13 außen kreisförmig begrenzt, während die Innenkontur etwa an einem Knie oder Knick des Kanals oval sein kann. Ein schräg in den Verteiler einfahrendes Werkzeug, zweckmäßig z.B. ein Fräser, kann die Ringfläche an diesem Eckbereich erzeugen. Ihre Größe und Innenform wird dabei von dem Winkel zur Kanalachse sowie von der Eindringtiefe des Werkzeugs bestimmt. In der Gestaltung von Anspruch 14 ist die Ringfläche beispielsweise als Anschliff derart ausgebildet, daß sie eine Ebene senkrecht zu dem Winkel definiert. Infolgedessen liegt die abdichtende Stirnfläche des Stopfens exakt parallel zu der genannten Ebene, wodurch seine satte Anlage an der Ringfläche in jedem Falle gewährleistet ist.

Anspruch 15 sieht vor, daß an einem Verteiler-Durchgangskanal mit einer Reihe von Abzweigen ausgewählte Strecken durch Paare einander zugeordneter Stopfen verschließbar sind. So ist es auf besonders rationelle Weise möglich, im Verteiler einen Durchgangskanal vorzusehen, von dem aus abzweigende Düsen symmetrisch, z.B. paarweise, in genau balancierter Anordnung mit Spritzmasse versorgt werden. Konstruktiv ist es dabei vorteilhaft, wenn gemäß Anspruch 16 an den Enden des Kanals entgegengesetzt geneigte Ringflächen vorhanden sind, auf die jeweils entsprechend geneigte Stopfen zustellbar sind.

Allgemein ist es für die Anbringung wie für die Wirkung des Stopfens günstig, nach Anspruch 17 einen Winkel zur Kanalachse vorzusehen, der im Bereich von 30° bis 45° liegt, vorzugsweise bei 40° bis 45°. Eine solche Schräglage läßt nicht nur gute Zugänglichkeit zu, sondern sorgt auch für einen großen Umfang der Öffnungs-Ringfläche an dem betreffenden Kanalabschnitt bzw. -bereich. Dadurch vermeidet man mechanische Überbelastungen und zu hohe Flächenpressungen am Kanal bzw. an einem Knie oder Eck; zugleich wird ein überaus exakter Formschluß auf relativ ausgedehnter Ringfläche ermöglicht. In der Abgangsbohrung zur Düse hin entsteht kein Strömungsschatten; vielmehr wird dieser Bereich völlig spülbar, in dem sich herkömmlich unmittelbar hinter der Umlenkung innenseitig oft Material absetzte, das im Betrieb thermisch geschädigt wurde.

Noch eine andere Weiterbildung besteht laut Anspruch 18 darin, daß der bzw. jeder Stopfen lagefixierbar ist, z.B. mittels eines Sicherungsstiftes, der quer zur Achse des Kanals oder quer zur Achse des Stopfens in den Verteiler so eintreib- oder einschraubbar ist, so daß der Stopfen verkeilt wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1:: Eine Axialschnittansicht eines Verteilers entsprechend der Linie I-I in Fig. 4,
- Fig. 2:: eine vergrößerte Teil-Schnittansicht entsprechend dem Kreis II in Fig. 1,
- Fig. 3:: eine vergrößerte Teil-Schnittansicht entsprechend dem Kreis III in Fig. 1,
- Fig. 4:: eine Draufsicht auf den Verteiler gemäß Fig. 1 und
- Fig. 5:: eine Axialschnittansicht einer anderen Ausführungsform eines Verteilers.

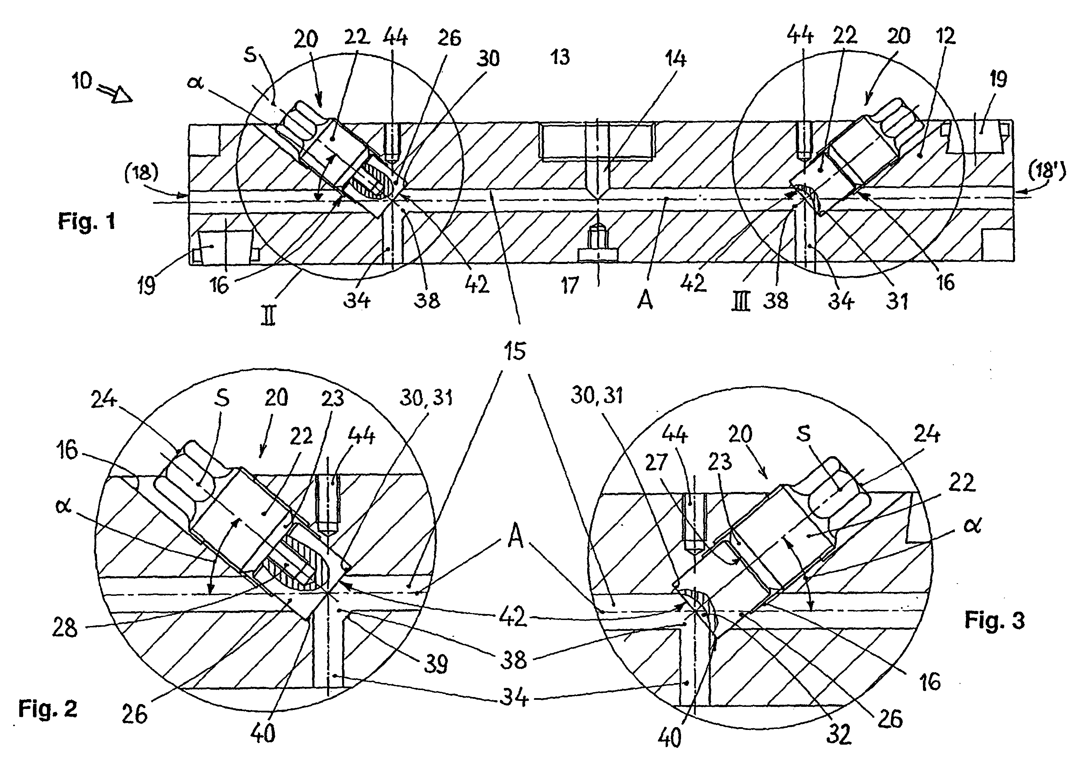

Man erkennt im Ausführungsbeispiel von Fig. 1 bis 4 einen allgemein mit 10 bezeichneten Verteiler, der in einer Platte 12 zentral einen Schraubanschluß 13 für ein (nicht dargestelltes) Anschlußstück hat, durch das Spritzmasse in einen Eintrittskanal 14 des Verteilers 10 gelangt. Quer zu der zentralen Einspeisung verläuft ein Verteiler-Hauptkanal 15, dessen Enden 18 bzw. 18' in an sich bekannter Weise verschließbar sind. Vom Hauptkanal 15 gehen Abzweige 34 an die Unterseite der Verteilerplatte 12, wo (nicht dargestellte) Düsen mit gleicher lichter Weite anschließen können. Zentral ist an der Unterseite der Verteilerplatte 12 ein Schraubanschluß 17 für ein (nicht gezeichnetes) Distanzstück vorgesehen, das ebenso wie die Düsen für maßgenaue Abstützung an einer Formplatte in einer Spritzgießvorrichtung sorgt.

Man erkennt insbesondere in Fig. 2 und 3, daß in spitzem Winkel α zur Achse A des Kanals 15 Schrägbohrungen 16 an Eckbereiche 38 heranführen, die zu verschließen sind, um die durch den Eintrittskanal 14 zugeführte Spritzmasse in die Abzweige 34 umzulenken. In das betreffende Knie ist eine Öffnung 42 eingearbeitet, die von einer Ringfläche 40 umschlossen ist. Durch die Öffnung 42 hindurch kann die Knie-Innenseite bearbeitet werden, so daß z.B. eine Schräge 39 entsteht (Fig. 2).

Die Schrägbohrung 16 dient jeweils zur Aufnahme eines Abdicht-Stopfens 20. Dieser ist bevorzugt zweiteilig und hat einen Schraubkörper 22 mit einem Kopf 24, der zum Angriff eines (nicht dargestellten) Werkzeugs außen und/oder innen profiliert sein kann. An dem nach innen gerichteten Teil des Schraubkörpers 22 hat er eine Einlauffase 23. Dem Schraubkörper 22 ist ein Druckstück 26 vorgeordnet, das nach außen hin angefast ist und ein zentrisches Gewindeloch hat, um eine (nicht gezeichnete) Schraube eindrehen zu können. Diese erlaubt eine bequeme Montage und Demontage des Druckstücks 26. Seine Stimfläche 30 bewirkt mit ihrem äußeren Teil, der einen Abdichtring 31 bildet, den druckdichten Verschluß der Öffnung 42 an der Ringfläche 40. Zweckmäßig ist die Schrägbohrung 16 stufenförmig gestaltet, so daß an einen äußeren Einlauf-Abschnitt von etwas größerer Weite ein Gewindeabschnitt zur Aufnahme des Schraubkörpers 22 anschließt, dem nach innen ein noch engerer, zylindrischer Abschnitt folgt, der das Druckstück 26 mit ganz enger Passung führt. Dessen Oberseite 27 (Fig. 3) kann leicht ballig ausgebildet sein, um gewindebedingte Winkelabweichungen des Stopfens 20 auszugleichen und satten Formschluß der Dichtfläche 31, 40 zu gewährleisten.

Im Beispiel der Fig. 2 ist die Stimfläche 30 des Druckstücks 26 plan und der Eckbereich 38 dementsprechend durch eine ebene Fläche verschlossen. Diese Anordnung ist fertigungstechnisch besonders einfach und genau herzustellen.

Eine Alternative zeigt Fig. 3, wobei das Druckstück 26 an seiner Stirnfläche 30 zwar ebenfalls einen ebenen Abdichtring 31 aufweist, der an der Ringfläche 40 rund um die Öffnung 42 zur Anlage kommt. Zentrisch ist an der Stirnfläche 30 jedoch eine Höhlung 32 vorgesehen, beispielsweise in Form einer Kugelkalotte, so daß ein stetiger Übergang vom Hauptkanal 15 zum Abzweig 34 durch passende Gestalt-Ergänzung hergestellt ist.

Der Winkel α zwischen der Achse A des Kanals 15 und der Achse S des Stopfens 20 liegt allgemein im Bereich von 30° bis 45°, speziell bei 40° bis 45°. Dadurch entsteht in den Abzweigungen 34 (zur Düse hin) kein Strömungsschatten, so daß die Eckbereiche 38, 39 stets völlig gespült werden. Man erkennt, daß die Stopfen-Anordnung lösbare Verschlüsse bildet, die eine mechanische Reinigung mit kurzen Stillstandszeiten erlauben.

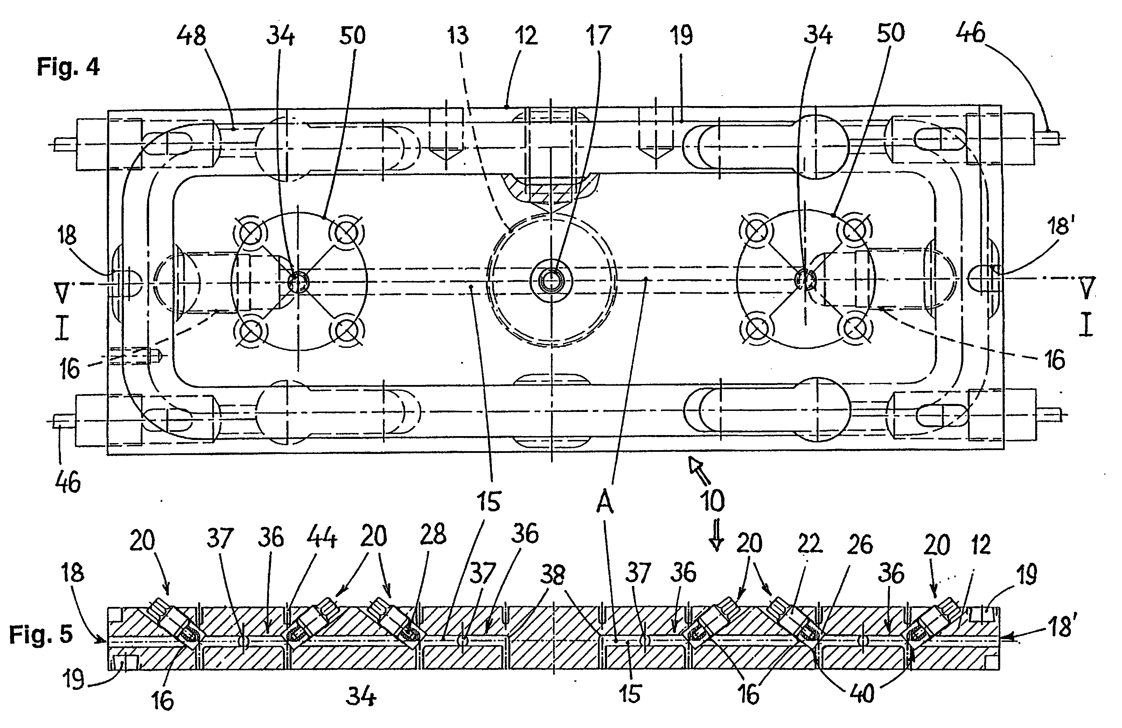

Den weiteren Aufbau eines Verteilers 10 veranschaulicht Fig. 4 in Verbindung mit Fig. 1. Man sieht, daß an der Ober- und Unterseite der Platte 12 Aufnahmen 19 für Temperiermittel vorhanden sind, namentlich für eine eingegossene Heizschlange 48, die über Elektroanschlüsse 46 mit Heizstrom versorgt wird. Beiderseits der zentralen Anschlüsse 17 bzw. 13 sind in der Längsmitte der Platte 12 die vom Kanal 15 abgehenden Abzweige 34 zu sehen, an denen jeweils eine Düse 50 schematisch angedeutet ist.

Bei einem anderen Ausführungsbeispiel (Fig. 5) hat der Verteiler 10 in seiner Platte 12 jeweils zwei stimseitig - von den Enden 18 bzw. 18' her - eingebrachte Kanalbohrungen 15, von denen jeweils vier Abzweige 34 zur Plattenunterseite abgehen. An ausgewählten, zu verschließenden Strecken 36 sind außerdem Querbohrungen 37 vorhanden, die parallel zur Plattenebene verlaufen und ihrerseits in weitere (nicht gezeichnete) Abzweige übergehen können. Die ausgewählten Strecken 36 können an innenliegenden Bereichen des Kanals 15 durch Stopfen 20 verschlossen werden, um abzweigende Düsen insbesondere symmetrisch in genau balancierter Streckenführung mit Spritzmasse zu versorgen. Dabei sind die Schrägbohrungen 16 und die Stopfen 20 jeweils abwechselnd zueinander entgegengesetzt geneigt.

Man ersieht aus Fig. 1 bis 3 und Fig. 5 ferner, daß an der Platten-Oberseite Gewindebohrungen 44 vorhanden sein können, um (nicht gezeichnete) Distanzstücke zu befestigen, die innerhalb des Spritzgieß-Werkzeuges den zum Abdichten erforderlichen Anpreßdruck auf die Düse ermöglichen.

Die Erfindung ist nicht auf die vorbeschriebenen Ausführungsformen beschränkt, sondern in vielfältiger Weise abwandelbar. Beispielsweise kann der bzw. jeder Stopfen 20 in seiner Lage mittels eines Sicherungsstiftes fixiert werden, der quer zur Achse A des Kanals 15 oder quer zur Achse S des Stopfens 20 in den Verteiler 10 eintreib- oder einschraubbar ist. In solchem Falle kann ein Gewindeabschnitt der Schrägbohrung 16 und ein Schraubkörper 22 des Stopfens entbehrlich sein, so daß dieser mit dem Druckstück 26 einteilig sein kann.

Man erkennt jedoch, daß erfindungsgemäß zum druckdichten Verschließen von Kanalabschnitten in einem Heißkanalverteiler 10 lösbar daran befestigte, insbesondere zweiteilige Stopfen 20 dienen, die in spitzem Winkel α zu der Achse A eines mit plastifizierter Masse beschickbaren Kanals 15 angeordnet sind und mit einem geschlossenen Abdichtrand der Stirnfläche 30 auf eine geschlossene Ringfläche 40 gepreßt werden, welche eine Öffnung 42 des Kanals 15 umschließt. Der Winkel α liegt z.B. bei 40° bis 45°. Der Stopfen 20 weist ein Druckstück 26 vor einem Schraubkörper 22 auf, der in eine Schrägbohrung 16 einschraubbar ist, die an dem abzudichtenden Kanalbereich im Verteiler 10 mündet. Am Abdichtrand 31 ist die Stopfen-Stimfläche 30 plan; radial innen kann eine konkave oder ballige Wölbung 32, z.B. in Gestalt einer Kugelkalotte vorhanden sein, deren Durchmesser von dem Mindestradius des Abdichtrandes 31 begrenzt ist. Die außen kreisförmig begrenzte Ringfläche 40 kann an einem Knie 38 angeordnet sein, mit dem der Kanal 15 in einen Abzweig 34 des Verteilers 10 übergeht. An einem Durchgangskanal 15 mit einer Reihe von Abzweigen 34 sind ausgewählte Strecken 36, deren Enden zueinander entgegengesetzt geneigte Ringflächen 40 haben, durch zugeordnete Stopfen 20 verschließbar.

Sämtliche aus den Ansprüchen, der Beschreibung und der Zeichnung hervorgehenden Merkmale und Vorteile, einschließlich konstruktiver Einzelheiten und räumlicher Anordnungen, können sowohl für sich als auch in den verschiedensten Kombinationen erfindungswesentlich sein.

### Bezugszeichenliste

- A: Achse
- α: Winkel
- S: Achse

- 10: Verteiler
- 12: Platte
- 13: Schraubanschluß
- 14: Eintrittskanal
- 15: Hauptkanal
- 16: Schrägbohrung
- 17: Schraubanschluß
- 18, 18': Enden
- 19: Aufnahmen
- 20: Stopfen
- 22: Schraubkörper
- 23: Einlauffase
- 24: Kopf
- 26: Druckstück
- 27: Oberseite
- 28: Gewindeloch
- 30: Stirnfläche
- 31: Abdichtring
- 32: Höhlung
- 34: Abzweig(e)
- 36: Strecke(n)
- 37: Querbohrung
- 38: Eck/Knie
- 39: Schräge
- 40: Ringfläche
- 42: Öffnung
- 44: Gewindebohrung(en)
- 46: Elektroanschlüsse
- 48: Heizschlange
- 50: Düsen

## Patentansprüche

1. Anordnung zum Verschließen von Kanalabschnitten in einem Heißkanalverteiler (10), der wenigstens einen mit plastifizierter Masse beschickbaren Kanal (15) aufweist, welcher durch lösbar am Verteiler (10) befestigte Stopfen (20) druckdicht verschließbar ist, **dadurch gekennzeichnet, daß** der bzw. jeder Stopfen (20) am Verteiler (10) in spitzem Winkel (α) zu der Achse (A) des Kanals (15) befestigbar ist und eine Stimfläche (30) hat, die druckdicht auf eine ihr gegenüberliegende geschlossene Ringfläche (40) preßbar ist, welche eine Öffnung (42) des Kanals (15) umschließt oder begrenzt.

2. Anordnung nach Anspruch 1, **dadurch gekennzeichnet, daß** die Stimfläche (30) des Stopfens (20) an einem entlang seiner Achse (S) geführten Druckstück (26) als geschlossener Abdichtrand ausgebildet ist.

3. Anordnung nach Anspruch 1 oder 2, **dadurch gekennzeichnet, daß** der Stopfen (20) einen Schraubkörper (22) aufweist, an oder in dessen Kopf (24) ein Werkzeug ansetzbar ist.

4. Anordnung nach einem der Ansprüche 1 bis 3, **dadurch gekennzeichnet, daß** der Stopfen (20) zweiteilig ist, indem einem Schraubkopf (24) ein separates Druckstück (26) vorgeordnet ist.

5. Anordnung nach Anspruch 4, **dadurch gekennzeichnet, daß** das Druckstück (26) in einer Schrägbohrung (16), die an dem abzudichtenden Kanalbereich im Verteiler (10) mündet, exakt geführt ist.

6. Anordnung nach einem der Ansprüche 2 bis 5, **dadurch gekennzeichnet, daß** die Stopfen-Stirnfläche (30) zumindest teilweise plan ist, namentlich am Abdichtrand.

7. Anordnung nach einem der Ansprüche 2 bis 6, **dadurch gekennzeichnet, daß** die Stopfen-Stirnfläche (30) eine Wölbung (32) aufweist, namentlich innerhalb des Abdichtrandes.

8. Anordnung nach Anspruch 7, **dadurch gekennzeichnet, daß** die Wölbung (32) die Gestalt einer Kugelkalotte hat, deren radiale Maximalausdehnung durch den Mindestradius des Abdichtrandes begrenzt ist.

9. Anordnung nach Anspruch 7 oder 8, **dadurch gekennzeichnet, daß** die Wölbung (32) in der Stimfläche (30) konkav verläuft.

10. Anordnung nach einem der Ansprüche 4 bis 8, **dadurch gekennzeichnet, daß** an der Stirnfläche (30) und/oder an der dem Schraubkopf (24) zugewandten Oberseite (27) des Druckstücks (26) eine konvexe, insbesondere leicht ballige Wölbung (32) vorhanden ist.

11. Anordnung nach einem der Ansprüche 3 bis 10, **dadurch gekennzeichnet, daß** das Druckstück (26) insbesondere zentrisch ein dem Schraubkörper (24) zugewandtes Gewindeloch (28) aufweist.

12. Anordnung nach einem der Ansprüche 1 bis 11, **dadurch gekennzeichnet, daß** die Ringfläche (40) an einem Eck oder Knie (38) angeordnet ist, mit dem der Kanal (15) in einen Abzweig (34) oder eine Austrittsöffnung des Verteilers (10) übergeht.

13. Anordnung nach einem der Ansprüche 1 bis 12, **dadurch gekennzeichnet, daß** die Ringfläche (40) außen kreisförmig begrenzt ist.

14. Anordnung nach einem der Ansprüche 1 bis 13, **dadurch gekennzeichnet, daß** die Ringfläche (40) beispielsweise als Anschliff derart ausgebildet ist, daß sie eine Ebene senkrecht zu dem Winkel (α) definiert.

15. Anordnung nach einem der Ansprüche 1 bis 14, **dadurch gekennzeichnet, daß** an einem Verteiler-Durchgangskanal (15) mit einer Reihe von Abzweigen (34) ausgewählte Strecken (36) durch zugeordnete Stopfen (20) verschließbar sind.

16. Anordnung nach Anspruch 15, **dadurch gekennzeichnet, daß** an den Enden der Strecken (36) entsprechend geneigte Ringflächen (40; 40') vorhanden sind, auf die jeweils entgegensetzt geneigte Stopfen (20) zustellbar sind.

17. Anordnung nach einem der Ansprüche 1 bis 16, **dadurch gekennzeichnet, daß** der Winkel (α) im Bereich von 30° bis 45° liegt, vorzugsweise bei 40° bis 45°.

18. Anordnung nach einem der Ansprüche 1 bis 17, **dadurch gekennzeichnet, daß** der bzw. jeder Stopfen (20) lagefixierbar ist.

## Claims

1. Arrangement for closing runner sections in a hot runner manifold (10) which has at least one runner (15) to be charged with plastified compound, which runner is adapted to be closed in a pressure-tight manner by plugs (20) fastened detachably to the manifold (10), **wherein** the and each plug (20), respectively, is designated for fastening to the manifold at an acute angle (α) to the axis (A) of the runner (15) and has a front surface (30) to be forced pressure-tight against an opposite closed annular surface (40) which encloses or limits an opening (42) of the runner (15).

2. Arrangement according to claim 1, **wherein** the front surface (30) of the plug (20) is designed as a closed sealing edge on a thrust piece (26) guided along its axis (S).

3. Arrangement according to claim 1 or claim 2, **wherein** the plug (20) has a screw body (22) on or in whose head (24) a tool is applicable.

4. Arrangement according to any one of claims 1 to 3, **wherein** the plug (20) consists of two parts, namely a screw head (24) and a pre-placed thrust piece (26).

5. Arrangement according to claim 4, **wherein** the thrust piece (26) is precisely guided in an inclined bore (16) which leads into the manifold (10) at the runner section to be sealed.

6. Arrangement according to any one of claims 2 to 5, **wherein** the plug front surface (30) is at least partially plane, in particular at the sealing edge.

7. Arrangement according to any one of claims 2 to 6, **wherein** the plug front surface (30) has a curvature (32), in particular within the sealing edge.

8. Arrangement according to claim 7, **wherein** the curvature (32) has the shape of a spherical cup whose maximum radial extension is limited by the minimum radius of the sealing edge.

9. Arrangement according to claim 7 or claim 8, **wherein** the curvature (32) in the front surface (30) is concave.

10. Arrangement according to any one of claims 4 to 8, **wherein** the front surface (30) and/or at the upper side (27) of the thrust piece (26) directed toward the screw head (24) has a convex, in particular slightly crowned curvature (32).

11. Arrangement according to any one of claims 3 to 10, **wherein** the thrust piece (26) has, in particular centrally a tapped hole (28) directed toward the screw body (24).

12. Arrangement according to any one of claims 1 to 11, **wherein** the annular surface (40) is arranged at a comer or elbow (38) where the runner (15) passes into a branch (34) or an outlet of the manifold (10).

13. Arrangement according to any one of claims 1 to 12, **wherein** the annular surface (40) is limited outside by a circle.

14. Arrangement according to any one of claims 1 to 13, **wherein** the annular surface (40) is designed as e.g. a ground or polished section such that it defines a plane perpendicular to the angle (α).

15. Arrangement according to any one of claims 1 to 14, **wherein** selected sections (36) at a manifold through runner (15) with several branches (34) are adapted to be closed by associated plugs (20).

16. Arrangement according to claim 15, **wherein** the ends of the sections (36) are provided with correspondingly inclined annular surfaces (40; 40') to be engaged by plugs (20) inclined in the opposite direction.

17. Arrangement according to any one of claims 1 to 16, **wherein** the angle (α) is within the range of 30° to 45°, preferably between 40° and 45°

18. Arrangement according to any one of claims 1 to 17, **wherein** the and any plug (20), respectively is adapted to be fixed in its position.

## Revendications

1. Agencement servant à fermer des sections de canaux dans un distributeur à canaux chauds (10) qui dispose d'un moins un canal (15) pouvant être alimenté en matière plastifiée, lequel peut être fermé de manière étanche par des bouchons (20) fixés amoviblement au distributeur (10) **caractérisé en ce que** le ou chaque bouchon (20) peut être fixé au distributeur (10) en angle aigu (α) par rapport à l'axe (A) du canal (15) et **en ce qu'**il dispose d'une surface frontale (30), laquelle peut être pressée de manière étanche contre une surface d'anneau fermée (40) en face d'elle, qui entoure ou limite une ouverture (42) du canal (15).

2. Agencement selon la revendication 1, **caractérisé en ce que** la surface frontale (30) du bouchon (20), sur un membre de pression (26) qui est conduit le long de son axe (S), est conçue en tant que rebord d'étanchement fermé.

3. Agencement selon la revendication 1 ou 2, **caractérisé en ce que** le bouchon (20) dispose d'un corps de vissage (22), sur ou dans la tête (24) duquel on peut apposer un outil.

4. Agencement selon l'une des revendications 1 à 3, **caractérisé en ce que** le bouchon (20) est en deux pièces, un membre de pression individuel (26) étant placé devant une tête de vissage (24).

5. Agencement selon la revendication 4, **caractérisé en ce que** le membre de pression (26) est guidé avec précision dans une perforation oblique (16) qui débouche dans le distributeur (10) sur la zone à étancher du canal.

6. Agencement selon l'une revendications 2 à 5, **caractérisé en ce que** la surface frontale (30) du bouchon est au moins partiellement plane, notamment au rebord d'étanchement.

7. Agencement selon l'une des revendications 2 à 6, **caractérisé en ce que** la surface frontale (30) du bouchon présente une bombure (32), notamment à l'intérieur du rebord d'étanchement.

8. Agencement selon la revendication 7, **caractérisé en ce que** la bombure (32) a la forme d'une calotte sphérique, dont l'étendue radiale maximale est limitée par le rayon minimum du rebord d'étanchement.

9. Agencement selon la revendication 7 ou 8, **caractérisé en ce que** la bombure (32) dans la surface frontale (30) est concave.

10. Agencement selon l'une des revendications 4 à 8, **caractérisé en ce qu**'il y sur la surface frontale (30) et/ou sur le côté supérieur (27) du membre de pression (26), tourné vers la tête de vis (24), une courbure (32) convexe, notamment légèrement bombée.

11. Agencement selon l'une des revendication 3 a 10, **caractérisé en ce que** le membre de pression (26) a un trou taraudé (28), disposé notamment au centre et tourné vers le corps de vissage (22).

12. Agencement selon l'une des revendications 1 à 11, **caractérisé en ce que** la surface d'anneau (40) est disposée sur un angle ou coude (38) avec lequel le canal (15) évolue en une ramification (34) ou ouverture de sortie du distributeur (10).

13. Agencement selon l'une des revendications 1 à 12, **caractérisé en ce que** la surface d'anneau (40) est limitée circulairement à l'extérieur.

14. Agencement selon l'une des revendications 1 à 13, **caractérisé en ce que** la surface d'anneau (40) est façonnée de telle manière, par exemple par affûtage, qu'elle définit un plan perpendiculaire à l'angle (α).

15. Agencement selon l'une des revendications 1 à 14, **caractérisé en ce que** sur un canal de passage (15) d'un distributeur avec une série de ramifications (34), des segments choisis (36) peuvent être fermés par des bouchons correspondants (20).

16. Agencement selon la revendication 15, **caractérisé en ce qu'**il y a aux extrémités des segments (36) des surfaces d'anneau (40; 40') avec une inclinaison correspondante, sur lesquelles peuvent être positionnés des bouchons respectifs (20) avec une inclinaison en sens opposé.

17. Agencement selon l'une des revendications 1 à 16, **caractérisé en ce que** l'angle (α) mesure entre 30° et 45°, de préférence entre 40° et 45°.

18. Agencement selon l'une des revendications 1 à 17, **caractérisé en ce que** le ou chaque bouchon (20) peut être fixé en sa position.
